(19) **Europäisches Patentamt** / **European Patent Office** / **Office européen des brevets**

(11) **EP 4 047 822 A1**

(12) **EUROPEAN PATENT APPLICATION**
published in accordance with Art. 153(4) EPC

(43) Date of publication:
**24.08.2022 Bulletin 2022/34**

(51) International Patent Classification (IPC):
**H04B 1/18** (2006.01)    **H01Q 1/22** (2006.01)

(21) Application number: **20881282.6**

(86) International application number:
**PCT/CN2020/124819**

(22) Date of filing: **29.10.2020**

(87) International publication number:
**WO 2021/083273 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019 CN 201911050948**

(71) Applicant: **GUANGDONG OPPO MOBILE TELECOMMUNICATIONS CORP., LTD.**
**Dongguan, Guangdong 523860 (CN)**

(72) Inventor: **JIA, Yuhu**
**Dongguan, Guangdong 523860 (CN)**

(74) Representative: **Mewburn Ellis LLP**
**Aurora Building**
**Counterslip**
**Bristol BS1 6BX (GB)**

(54) **ANTENNA MATCHING CIRCUIT, RADIO FREQUENCY CIRCUIT, AND ELECTRONIC APPARATUS**

(57)    An antenna matching circuit, a radio frequency circuit and an electric device are provided in the present disclosure. The antenna matching circuit is applied to a pair of antenna branches including a first antenna branch and a second antenna branch. The first antenna branch is provided with a middle-high band feeding point and the second antenna branch is provided with a low band feeding point. A matching point is provided between an end of the second antenna branch and the low band feeding point, the antenna matching circuit is coupled with the second antenna branch through the matching point, and a distance between an end of the first antenna branch and the end of the second antenna branch is less than a preset distance threshold. An equivalent impedance of the antenna matching circuit is an inductor or a high resistance when the pair of antenna branches operates in a low band mode, and the equivalent impedance of the antenna matching circuit is a capacitor or a low resistance when the pair of antenna branches operates in a middle-high band mode. Antenna isolation can be improved in implementations of the present disclosure.

FIG. 1

Processed by Luminess, 75001 PARIS (FR)

## Description

TECHNICAL FIELD

The present disclosure relates to the technical field of antennas, in particular to an antenna matching circuit, a radio frequency circuit, and an electric device.

BACKGROUND

Currently, in an era of the prevalence of full-screen mobile phones, antenna environment of the mobile phones and other electronic devices is getting smaller and smaller, and with popularity of the fifth-generation (5G) mobile communication, more and more antennas are needed and increased seams need to be opened in the metal mobile phones, which seriously affects aesthetic feeling of users on the mobile phones. In some designs, in order to reduce seam requirements, a distance between ends of the two antennas is set to be small, which leads to poor antenna isolation.

SUMMARY

An antenna matching circuit, a radio frequency circuit, and an electric device are provided in implementations of the present disclosure, which can improve antenna isolation.

In a first aspect of implementations of the present disclosure, an antenna matching circuit is provided, which is applied to a pair of antenna branches including a first antenna branch and a second antenna branch. The first antenna branch is provided with a middle-high band feeding point and the second antenna branch is provided with a low band feeding point. A matching point is provided between an end of the second antenna branch and the low band feeding point, the antenna matching circuit is coupled with the second antenna branch through the matching point, and a distance between an end of the first antenna branch and the end of the second antenna branch is less than a preset distance threshold. An equivalent impedance of the antenna matching circuit is an inductor or a high resistance when the pair of antenna branches operates in a low band mode, and the equivalent impedance of the antenna matching circuit is a capacitor or a low resistance when the pair of antenna branches operates in a middle-high band mode.

In a second aspect of implementations of the present disclosure, a radio frequency circuit is provided, which includes a radio frequency transceiver, a radio frequency front-end circuit, and the antenna matching circuit and the pair of antenna branches described in the first aspect of the implementations of the present disclosure.

In a third aspect of implementations of the present disclosure, an electronic device is provided, which includes a device body and the radio frequency circuit described in the second aspect of the implementations of the present disclosure.

BRIEF DESCRIPTION OF THE DRAWINGS

In order to describe technical solutions of implementations of the present disclosure or in the related art more clearly, the following will give a brief introduction to the accompanying drawings used for describing the implementations or the related art. Apparently, the accompanying drawings hereinafter described are merely some implementations of the present disclosure. Based on these drawings, those of ordinary skill in the art can also obtain other drawings without creative effort.

FIG. 1 is a schematic structural diagram of an antenna matching circuit provided in implementations of the present disclosure.
FIG. 2 is a schematic structural diagram of an antenna matching circuit provided in other implementations of the present disclosure.
FIG. 3a is a schematic structural diagram of an antenna matching circuit provided in other implementations of the present disclosure.
FIG. 3b is a schematic structural diagram of an antenna matching circuit provided in other implementations of the present disclosure.
FIG. 3c is a schematic structural diagram of an antenna matching circuit provided in other implementations of the present disclosure.
FIG. 4 is a schematic structural diagram of application of an antenna matching circuit and a filter circuit in a pair of antenna branches provided in implementations of the present disclosure.
FIG. 5 is a schematic structural diagram of a radio frequency circuit provided in implementations of the present disclosure.
FIG. 6 is a schematic structural diagram of an electronic device provided in implementations of the present disclosure.

DETAILED DESCRIPTION

Technical solutions in implementations of the present disclosure will be described clearly and completely hereinafter with reference to the accompanying drawings in the implementations of the present disclosure. Apparently, the described implementations are merely some rather than all implementations of the present disclosure. All other implementations obtained by those of ordinary skill in the art based on the implementations of the present disclosure without creative efforts shall fall within the protection scope of the present disclosure.

The terms "first", "second", "third", "fourth", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "implementation" referred to herein means that a particular feature, structure, or feature described in conjunction with the implementation may be contained in at least one implementation of the present disclosure. The phrase appearing in various places in the specification does not necessarily refer to the same implementation, nor does it refer to an independent or alternative implementation that is mutually exclusive with other implementations. It is expressly and implicitly understood by those skilled in the art that an implementation described herein may be combined with other implementations.

An electronic device referred to herein may include various handheld devices, in-vehicle devices, wearable devices, computing devices that have wireless communication functions or other processing devices connected with a wireless modem, as well as various forms of user equipment (UE), mobile stations (MS), terminal devices, and the like. For ease of description, the above-mentioned devices are collectively referred to as an electronic device.

Currently, in an era of the prevalence of full-screen mobile phones, antenna environment of the mobile phones is getting smaller and smaller, and with popularity of 5G mobile communication, more and more antennas are needed and increased seams need to be opened in the metal mobile phones, which seriously affects aesthetic feeling of users on the mobile phones. In some designs, in order to reduce seam requirements, some end-to-end antennas (that is, a distance between ends of the two antennas is set to be small) are produced, and isolation of these antennas is poor, which affects efficiency and throughput thereof.

On this basis, an antenna matching circuit, a radio frequency circuit, and an electric device are provided in implementations of the present disclosure, which can improve antenna isolation.

In a first aspect of implementations of the present disclosure, an antenna matching circuit is provided, which is applied to a pair of antenna branches including a first antenna branch and a second antenna branch. The first antenna branch is provided with a middle-high band feeding point and the second antenna branch is provided with a low band feeding point. A matching point is provided between an end of the second antenna branch and the low band feeding point, the antenna matching circuit is coupled with the second antenna branch through the matching point, and a distance between an end of the first antenna branch and the end of the second antenna branch is less than a preset distance threshold. An equivalent impedance of the antenna matching circuit is an inductor or a high resistance when the pair of antenna branches operates in a low band mode, and the equivalent impedance of the antenna matching circuit is a capacitor or a low resistance when the pair of antenna branches operates in a middle-high band mode.

In the implementations of the present disclosure, the antenna matching circuit is applied to the pair of antenna branches including the first antenna branch and the second antenna branch. The first antenna branch is provided with the middle-high band feeding point and the second antenna branch is provided with the low band feeding point. The matching point is provided between the end of the second antenna branch and the low band feeding point, the antenna matching circuit is coupled with the second antenna branch through the matching point, and the distance between the end of the first antenna branch and the end of the second antenna branch is less than the preset distance threshold. The equivalent impedance of the antenna matching circuit is an inductor or a high resistance when the pair of antenna branches operates in the low band mode, and the equivalent impedance of the antenna matching circuit is a capacitor or a low resistance when the pair of antenna branches operates in the middle-high band mode. When the distance between the end of the first antenna branch and the end of the second antenna branch is small, the antenna matching circuit can be provided between the end of the second antenna branch and the low band feeding point. When the pair of antenna branches operates in the middle-high band mode, a current from the first antenna branch is cut off at the matching point, and the current from the first antenna branch will not pass through the low band feeding point and will not interfere with low band feeding, so that antenna isolation between the first antenna branch and the second antenna branch can be improved.

Optionally, the antenna matching circuit includes a passive matching circuit.

Optionally, the antenna matching circuit includes a matching sub-circuit, one end of the matching sub-circuit is coupled with the matching point, and the other end of the matching sub-circuit is grounded.

Optionally, the antenna matching circuit includes at least two matching sub-circuits and the antenna matching circuit further includes a tuning switch. The tuning switch includes a fixed terminal and at least two selection terminals, and one end of a first matching sub-circuit is coupled with a first selection terminal of the tuning switch and the other end of the first matching sub-circuit is grounded, the first selection terminal is a selection terminal in the at least two selection terminals corresponding to the first matching sub-circuit, the fixed terminal is coupled with the matching point, and the first matching sub-circuit is any one of the at least two matching sub-circuits.

Optionally, the antenna matching circuit includes at least two matching sub-circuits and the antenna matching circuit further includes at least two tuning switches corresponding to the at least two matching sub-circuits. One end of a first matching sub-circuit is coupled with the matching point through a first tuning switch and the other end of the first matching sub-circuit is grounded, and the first matching sub-circuit is any one of the at least two matching sub-circuits and the first tuning switch is a tuning switch in the at least two tuning switches corresponding to the first matching sub-circuit.

Optionally, the matching sub-circuit includes at least one inductor and at least one capacitor.

Optionally, the matching sub-circuit includes an inductor and a capacitor, and the inductor and the capacitor are connected in parallel.

Optionally, the matching sub-circuit includes a first inductor, a second inductor, and a first capacitor. The first inductor is connected in series with the first capacitor and then connected in parallel with the second inductor.

Optionally, the middle-high band mode includes any one of a first middle-high band mode, a second middle-high band mode, and a third middle-high band mode. The first middle-high band mode is a 1/4 model of the first antenna branch, the second middle-high band mode is a 3/4 model of the second antenna branch, and the third middle-high band mode is a 1/2 model from the first antenna branch to the matching point. 1/4 of a wavelength corresponding to a center frequency of the first middle-high band mode is a length of the first antenna branch, 3/4 of a wavelength corresponding to a center frequency of the second middle-high band mode is a length of the second antenna branch, and 1/2 of a wavelength corresponding to a center frequency of the third middle-high band mode is a sum of the length of the first antenna branch and a part of the length of the second antenna branch, where the part of the length of the second antenna branch includes a length between the end of the second antenna branch and the matching point.

Optionally, the length of the first antenna branch is a length between the end of the first antenna branch and a ground end of the first antenna branch, and the length of the second antenna branch is a length between the end of the second antenna branch and a ground end of the second antenna branch.

Optionally, a filter circuit is provided at the low band feeding point, the filter circuit is configured to filter out interference of a middle-high band current in the first middle-high band mode to the low band feeding point, and the filter circuit is further configured to filter out interference of a middle-high band current in the second middle-high band mode to the low band feeding point.

Optionally, the filter circuit includes a band-pass filter, and the filter circuit is configured to filter out a current signal in a middle-high band and allow a current signal in a low band to pass through.

Optionally, when the pair of antenna branches operates in the third middle-high band mode, a middle-high band current from the middle-high band feeding point reaches the second antenna branch and is cut off at the matching point.

Optionally, the first antenna branch is a planar inverted L antenna or a planar inverted F antenna, and the second antenna branch is a planar inverted L antenna or a planar inverted F antenna.

Optionally, a frequency band corresponding to the low band is 703 Mega Hertz (MHz)- 960 MHz; and a frequency band corresponding to the middle-high band is 1710 MHz-2690 MHz.

Optionally, when the pair of antenna branches operates in the low band mode, a low band current in the pair of antenna branches from the second antenna branch is cut off at the matching point.

Optionally, when the pair of antenna branches operates in the middle-high band mode, a middle-high band current in the pair of antenna branches from the first antenna branch is cut off at the matching point.

In a second aspect of implementations of the present disclosure, a radio frequency circuit is provided, which includes a radio frequency transceiver, a radio frequency front-end circuit, the antenna matching circuit and the pair of antenna branches described in the first aspect of the implementations of the present disclosure.

Optionally, the radio frequency transceiver is configured to feed a current signal to the pair of antenna branches through the radio frequency front-end circuit, and the radio frequency transceiver is further configured to receive an electromagnetic signal induced by the pair of antenna branches through the radio frequency front-end circuit.

In a third aspect of implementations of the present disclosure, an electronic device is provided, which includes a device body and the radio frequency circuit described in the second aspect of the implementations of the present disclosure.

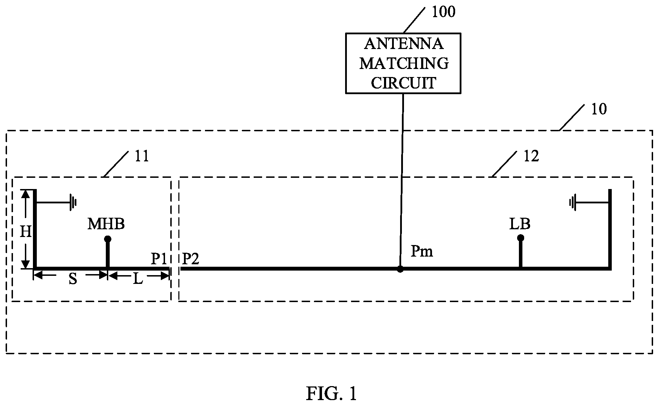

Reference is made to FIG. 1, which is a schematic structural diagram of an antenna matching circuit provided in implementations of the present disclosure. As illustrated in FIG. 1, the antenna matching circuit 100 is applied to a pair of antenna branches 10 including a first antenna branch 11 and a second antenna branch 12. The first antenna branch 11 is provided with a middle-high band feeding point MHB and the second antenna branch 12 is provided with a low band feeding point LB.

A matching point Pm is provided between an end P2 of the second antenna branch 12 and the low band feeding point LB, the antenna matching circuit 100 is coupled with the second antenna branch 12 through the matching point Pm, and a distance between an end P1 of the first antenna branch 11 and the end P2 of the second antenna branch 12 is less than a preset distance threshold.

An equivalent impedance of the antenna matching circuit 100 is an inductor or a high resistance when the pair of antenna branches 10 operates in a low band mode, and the equivalent impedance of the antenna matching circuit 100 is a capacitor or a low resistance when the pair of antenna branches 10 operates in a middle-high band mode.

In this implementation, the first antenna branch 11 and the second antenna branch 12 can be flexible printed circuit (FPC) antennas, antennas manufactured by laser-direct structure (LDS) technologies, or antennas manufactured by printing direct structure technologies.

The first antenna branch 11 and the second antenna branch 12 can be made of conductive material such as steel sheets, or be in forms of metal structural members or the like. The first antenna branch 11 and the second antenna branch 12 can be bent, curved, crossed, etc., and are not limited to a form illustrated in FIG. 1.

The first antenna branch 11 and the second antenna branch 12 can be planar inverted L antennas or planar inverted F antennas. In FIG. 1, for example, the first antenna branch 11 and the second antenna branch 12 are the planar inverted F antennas. As can be seen from FIG. 1, the first antenna branch 11 and the second antenna branch 12 are shaped like an inverted "F". The greatest advantage of the planar inverted F antennas is that it can change a position of the feeding point and adjust an input impedance to a matching impedance (for example, 50 ohms). When the inverted F antennas are designed, there are mainly three structural parameters that determine performance of the antennas, such as an input impedance, a resonant frequency, and an impedance bandwidth. As illustrated in the first antenna branch 11 in FIG. 1, these three structural parameters are respectively a resonant length L of the antenna, a height H of the antenna, and a distance S between two vertical arms. The L has the most direct influence on the resonant frequency and the input impedance of the first antenna branch 11. When the L increases, the resonant frequency of the first antenna branch 11 decreases and the input impedance of the first antenna branch 11 decreases. On the contrary, when the L decreases, the resonant frequency of the first antenna branch 11 increases and the input impedance of the first antenna branch 11 becomes greater. When the H increases, the resonant frequency of the first antenna branch 11 decreases and the input impedance of the first antenna branch 11 increases. When the height H decreases, the resonant frequency of the first antenna branch 11 increases and the input impedance of the first antenna branch 11 decreases. When the S increases, the resonant frequency of the first antenna branch 11 increases and the input impedance of the first antenna branch 11 decreases. When the S increases, the resonant frequency of the first antenna branch 11 decreases and the input impedance of the first antenna branch 11 increases.

Each of the first antenna branch 11 and the second antenna branch 12 can include a ground terminal and an end. The end P1 of the first antenna branch 11 is opposite to the end P2 of the second antenna branch 12, and the distance between P1 and P2 is less than the preset distance threshold. For example, the preset distance threshold can be set to be 5 mm. The antenna matching circuit 100 in this implementation is suitable for a case where the end P1 of the first antenna branch 11 is close to the end P2 of the second antenna branch 12, and is used to solve an antenna isolation issue in this case.

With the distance between the end P1 of the first antenna branch 11 and the end P2 of the second antenna branch 12 being set to be small, on the one hand antenna layout space can be saved, and on the other hand, with a small distance between the end P1 of the first antenna branch 11 and the end P2 of the second antenna branch 12, there will be a coupling effect between the first antenna branch 11 and the second antenna branch 12, and a displacement current in the first antenna branch 11 can be coupled into the second antenna branch 12, and a displacement current in the second antenna branch 12 can also be coupled into the first antenna branch 11, thus allowing the pair of antenna branches 10 including the first antenna branch 11 and the second antenna branch 12 to support signal transmission and reception in more frequency bands.

With the small distance between the end P1 of the first antenna branch 11 and the end P2 of the second antenna branch 12, a parasitic capacitor can be formed between the end P1 of the first antenna branch 11 and the end P2 of the second antenna branch 12, and energy (for example, in the form of the displacement current) at the mid-high band feeding point MHB on the first antenna branch 11 from an antenna feeder can be transmitted to the second antenna branch 12 through this parasitic capacitor, causing interference to the low band feeding point LB on the second antenna branch 12.

The middle-high band feeding point MHB can be provided on the first antenna branch 11, and the middle-high band feeding point MHB is a connection point of the first antenna branch 11 and the first antenna feeder (not illustrated in FIG. 1).When the first antenna branch 11 radiates electromagnetic waves to the outside, the middle-high band feeding point MHB is used to receive middle-high band electromagnetic energy transmitted from a radio frequency transceiver (not illustrated in FIG. 1) through a first antenna feeder coupled with the middle-high band feeding point MHB, and the first antenna branch 11 converts the middle-high band electromagnetic energy into a middle-high band electromagnetic wave to radiate to the outside. When the first antenna branch 11 receives the middle-high band electromagnetic wave radiated from the outside, the middle-high band feeding point MHB is used to convert the middle-high band electromagnetic wave into middle-high band electromagnetic energy and transmit it to the radio frequency transceiver through the first antenna feeder coupled with the middle-high band feeding point MHB.

The low band feeding point LB may be provided on the second antenna branch 12, which is the connection point of the second antenna branch 12 and the second antenna feeder (not illustrated in FIG. 1).When the second antenna branch 12 radiates electromagnetic waves to the outside, the low band feeding point LB is used to receive low band electromagnetic energy transmitted from the radio frequency transceiver (not illustrated in FIG. 1) through a second antenna feeder coupled with the low band feeding point LB, and the second antenna branch 12 converts the low band electromagnetic energy into a low band electromagnetic wave to radiate to the outside. When the first antenna branch 12 receives the low band electromagnetic wave radiated from the outside, the low feeding point LB is used to convert the low band electromagnetic wave into low band electromagnetic energy and transmit it to the radio frequency transceiver through the second antenna feeder coupled with the low band feeding point LB.

A frequency band corresponding to a low band (LB) in implementations of the present disclosure is 703 MHz- 960 MHz; a frequency band corresponding to a middle band (MB) in implementations of the present disclosure is 1710MHz- 2170MHz; a frequency band corresponding to a high band (HB) in implementations of the present disclosure is 2300MHz-2690MHz; and the frequency band corresponding to a middle-high band (MHB) in implementations of the present disclosure is 1710MHz-2690MHz.

The antenna matching circuit 100 is arranged at the matching point Pm, which is located between the end P2 of the second antenna branch 12 and the low band feeding point LB. The antenna matching circuit 100 can be a passive matching circuit. An end of the antenna matching circuit 100 is coupled with the matching point Pm, and the other end thereof is grounded. The antenna matching circuit 100 can be composed of capacitors, inductors, resistors and other elements.

After the antenna matching circuit is designed, it can meet requirements that its equivalent impedance is an inductor or high impedance in a low band mode (for example, in 703MHz- 960MHz band), and its equivalent impedance is a capacitor or a low resistance in middle-high band mode (for example, in 1710MHz- 2690MHz frequency band).

The impedance of the antenna matching circuit can be calculated according to a following formula:

$$Z=R（w）+j*f（w）;$$

where Z represents an impedance of the antenna matching circuit, R(w) is a function related to w, which is a resistive component of the impedance Z and indicates a pure resistance; F(w) is also a function related to w, which is a reactive component of impedance Z and indicates a pure inductor or a pure capacitor. W=$2\pi$*f, where f represents an operating frequency of the pair of antenna branches 10. When R(w) is equal to 0 and f(w) is a positive, the equivalent impedance of the impedance Z is an inductor; and when R(w) is equal to 0 and f(w) is a negative, the equivalent impedance of the impedance Z is a capacitor; when f(w) is equal to 0 and R(w) is greater than or equal to a preset resistance value, the equivalent impedance of the impedance Z is a high resistance; and when f(w) is equal to 0 and R(w) is less than the preset resistance value, the equivalent impedance of the impedance Z is a low resistance. The preset resistance threshold can be set by a designer of the antenna matching circuit according to operating currents in the first antenna branch 11 and the second antenna branch 12.

The antenna matching circuit can include at least one capacitor and at least one inductor, and a capacitor and an inductor themselves have parasitic resistances, so the antenna matching circuit is actually a matching circuit composed of capacitors, inductors and resistors. In the above formula, R(w) is a function not only related to w, but also related to respective capacitors, respective inductors, and respective resistors in the antenna matching circuit. f(w) is not only a function related to w, but also related to each capacitor, each inductor, and each resistor in the antenna matching circuit. According to the operating frequency of the pair of antenna branches 10, magnitudes of each capacitor, each inductor, and each resistor and combination (for example, in parallel or series) of each element in the antenna matching circuit 100 can be designed to meet requirements that the equivalent impedance of the antenna matching circuit 100 is an inductor or a high resistance when the pair of antenna branches 10 operates in the low band mode, and the equivalent impedance of the antenna matching circuit 100 is a capacitor or a low resistance when the pair of antenna branches 10 operates in the middle-high band mode.

When the pair of antenna branches 10 operates in the low band mode, the equivalent impedance of the antenna matching circuit 100 is designed as an inductor or a high resistance. Because a low band current easily passes through a pure inductor or a high resistance, a low band current from the second antenna branch 12 in the pair of antenna branches 10 easily passes through the antenna matching circuit 100, and the low band current from the second antenna branch 12 in the pair of antenna branches 10 is cut off at the matching point. A current from the second antenna branch 12 will not pass through the middle-high band feeding point on the first antenna branch 11, and will not interfere with middle-high band feeding, so that antenna isolation between the first antenna branch 11 and the second antenna branch 12 can be improved.

When the pair of antenna branches 10 operates in the middle-high band mode, the equivalent impedance of the antenna matching circuit 100 is designed as a capacitor or a low resistance. Because a middle-high band current easily passes through a pure capacitor or a low resistance, a middle-high band current from the first antenna branch 11 in the pair of antenna branches 10 easily passes through the antenna matching circuit 100, and the middle-high band current from the first antenna branch 11 in the pair of antenna branches 10 is cut off at the matching point. A current from the first antenna branch 11 does not pass through the middle-high band feeding point on the second antenna branch 12, and does not interfere with low band feeding, so that antenna isolation between the first antenna branch 11 and the second antenna branch 12 can be improved.

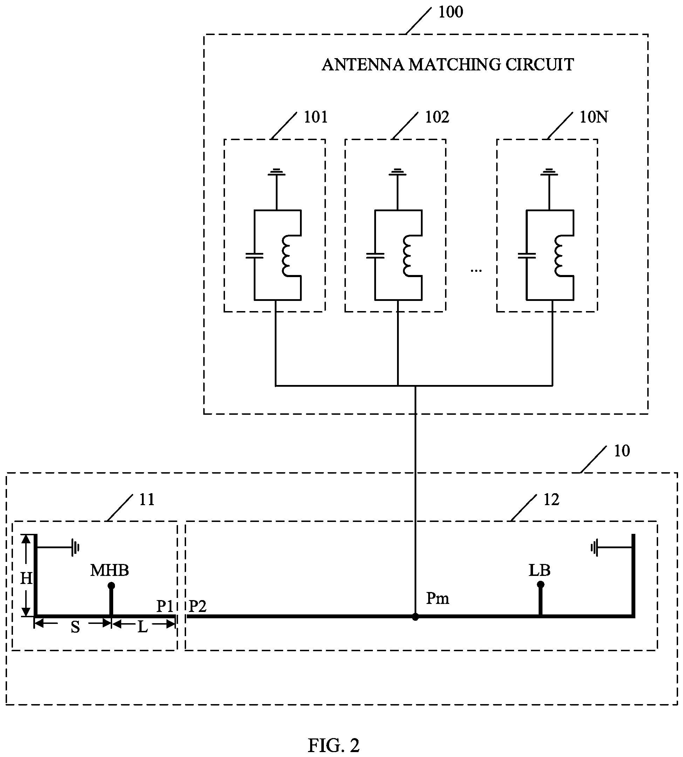

Reference is made to FIG. 2, which is a schematic structural diagram of an antenna matching circuit provided in other implementations of the present disclosure. The antenna matching circuit in FIG. 2 is obtained by further optimizing based on FIG. 1. The antenna matching circuit includes at least one matching sub-circuit, and each matching sub-circuit may include at least one inductor and at least one capacitor. As illustrated in FIG. 2, the antenna matching circuit 100 includes N matching sub-circuits (matching sub-circuits 101 to 10N as illustrated in FIG. 2). In FIG. 2, for example, each matching sub-circuit includes one inductor and one capacitor, and the inductor and the capacitor in each matching sub-circuit are coupled in parallel, and N is a positive integer. The number and the specification of the inductor and the capacitor in each matching sub-circuit can be the same or different, as long as a design criterion is covered that the equivalent impedance in the middle-high band mode is the capacitor or the low resistance, and the equivalent impedance in the low band mode is the inductor or the high resistance.

The equivalent impedance of the whole antenna matching circuit 100 in the middle-high band mode or the low band mode can be flexibly adjusted by adopting multiple matching sub-circuits, such that the equivalent impedance of the antenna matching circuit 100 is an inductor or a high resistance when the pair of antenna branches 10 operates in the low band mode, and the equivalent impedance of the antenna matching circuit 100 is a capacitor or a low resistance when the pair of antenna branches 10 operates in the middle-high band mode.

It should be noted that the inductor and the capacitor of each matching sub-circuit in FIG. 2 can be connected in parallel or in series, with parallel connection being taken as an example in FIG. 2. In FIG. 2, the number of capacitors of each matching sub-circuit can be different, the number of inductors included in each matching sub-circuit can be different, and a total number of inductors and capacitors included in each matching sub-circuit can be different.

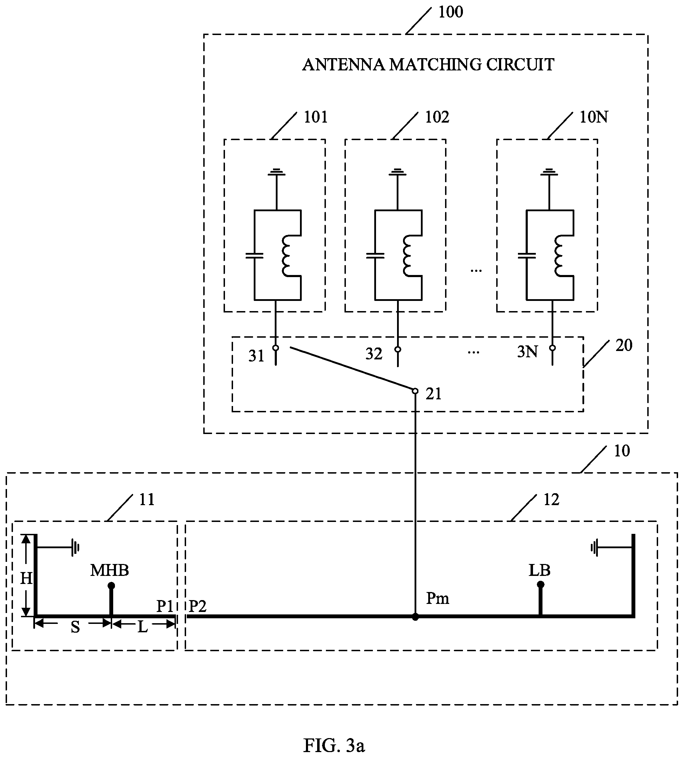

Reference is made to FIG. 3a, which is a schematic structural diagram of an antenna matching circuit provided in other implementations of the present disclosure. The antenna matching circuit of FIG. 3a is obtained by further optimizing based on FIG. 2. As illustrated in FIG. 3a, when the antenna matching circuit 100 includes N matching sub-circuits (matching sub-circuits 101 to 10N as illustrated in FIG. 3a), the antenna matching circuit 100 also includes a tuning switch 20, which includes one fixed terminal 21 and N selection terminals (a first selection terminal 31, a second selection terminal 32, ..., a n-th selection terminal 3N), and one end of a first matching sub-circuit 101 is coupled with the first selection terminal 31 of the tuning switch, and the other end of the first matching sub-circuit 101 is grounded. The first selection terminal 31 is a selection terminal corresponding to the first matching sub-circuit 101 in at least N selection terminals, the fixed terminal 21 is coupled with the matching point Pm, and the first matching sub-circuit 101 is any one of the N matching sub-circuits. N is a positive integer greater than or equal to 2.

The tuning switch 20 can select a corresponding matching sub-circuit according to the current operating frequency band of the pair of antenna branches 10.

It should be noted that each matching sub-circuit in FIG. 3a may include at least one inductor and at least one capacitor, and the number of capacitors included in each matching sub-circuit may be different, the number of inductors included in each matching sub-circuit may be different, a total number of inductors and capacitors included in each matching sub-circuit may be different, and a connection relationship between the inductors and the capacitors in each matching sub-circuit may be different. In FIG. 3a, for example, each matching sub-circuit includes one inductor and one capacitor, and the one inductor and one capacitor are connected in parallel.

In the antenna matching circuit 100 illustrated in FIG. 3a, the fixed terminal of the tuning switch 20 can be coupled with any selection terminal to select any one of N matching sub-circuits. The N matching sub-circuits in FIG. 3a correspond to N different optimal operating frequency bands, respectively, and can meet impedance matching requirements of different frequency bands in the low band and middle-high band modes.

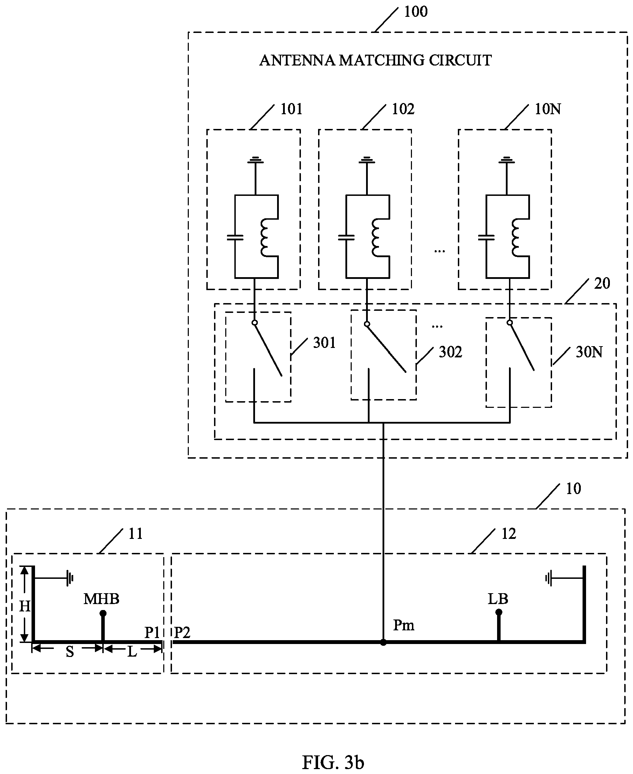

Reference is made to FIG. 3b, which is a schematic structural diagram of an antenna matching circuit provided in other implementations of the present disclosure. The antenna matching circuit of FIG. 3b is obtained by further optimizing based on FIG. 2. As illustrated in FIG. 3b, when the antenna matching circuit 100 includes N matching sub-circuits (matching sub-circuits 101 to 10N as illustrated in FIG. 3b), and the antenna matching circuit 100 further includes N tuning switches (tuning switches 301 to 30N as illustrated in FIG. 3b) corresponding to the N matching sub-circuits. One end of a first matching sub-circuits 101 is coupled with the matching point Pm through the first tuning switch 301, and the other end of the first matching sub-circuits 101 is grounded. The first matching sub-circuit 101 is any one of the N matching sub-circuits, and the first tuning switch 301 is a tuning switch corresponding to the first matching sub-circuit 101 in the N tuning switches. N is a positive integer greater than or equal to 2. The N tuning switches can select one or more corresponding matching sub-circuits according to the current operating frequency band of the pair of antenna branches 10. The N tuning switches can select, through the control circuit, one or more matching sub-circuits corresponding to the current operating frequency band of the pair of antenna branches 10.

In the antenna matching circuit 100 illustrated in FIG. 3b, the N tuning switches can be turned on or off to select any one or any combination of the N matching sub-circuits. The N matching sub-circuits in FIG. 3b correspond to M (M is greater than N) different optimal operating frequency bands, respectively. Compared with FIG. 3a, it can meet impedance matching requirements of more different frequency bands in low band and middle-high band modes.

It should be noted that each matching sub-circuit in FIG. 3b may include at least one inductor and at least one capacitor, and the number of capacitors included in each matching sub-circuit may be different, the number of inductors included in each matching sub-circuit can be different, a total number of inductors and capacitors included in each matching sub-circuit may be different, and a connection relationship between the inductors and the capacitors in each matching sub-circuit may be different. In FIG. 3b, for example, each matching sub-circuit includes one inductor and one capacitor, and the one inductor and the one capacitor are connected in parallel.

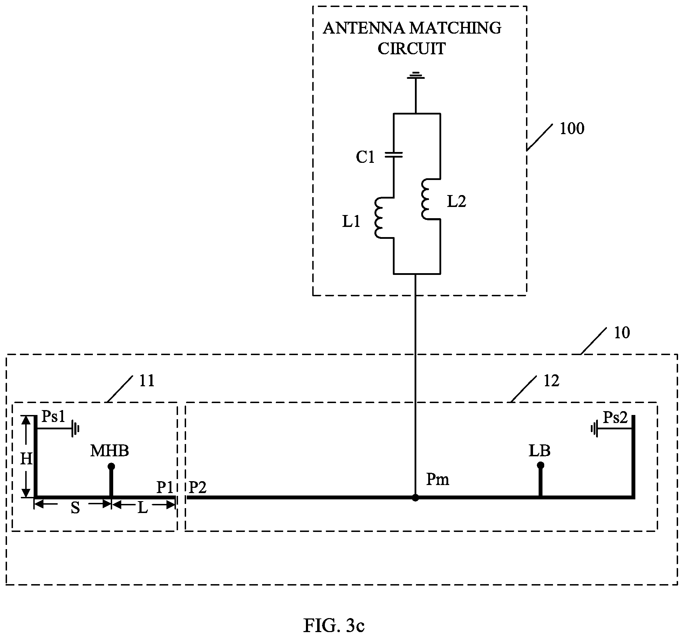

Reference is made to FIG. 3c, which is a schematic structural diagram of an antenna matching circuit provided in other implementations of the present disclosure. The antenna matching circuit of FIG. 3c is obtained by further optimizing based on FIG. 2. When the antenna matching circuit 100 includes one matching sub-circuit, the matching sub-circuit is the antenna matching circuit 100. One end of the matching sub-circuit is coupled with the matching point Pm, and the other end of the matching sub-circuit is grounded. As illustrated in FIG. 3c, the antenna matching circuit 100 includes a first inductor L1, a second inductor L2, and a first capacitor C1. The first inductor L1 is connected in series with the first capacitor C1 and then connected in parallel with the second inductor L2.

Two inductors and one capacitor are adopted in the antenna matching circuit 100 of this implementation, and its antenna isolation is better than that of only one inductor and one capacitor. Compared with a manner where more than two inductors and more than one capacitor are adopted, material cost can be saved with better antenna isolation.

The antenna matching circuit 100 is applied to the pair of antenna branches 10 including the first antenna branch 11 and the second antenna branch 12. The first antenna branch 11 is provided with the middle-high band feeding point MHB and the second antenna branch 12 is provided with the low band feeding point LB.

Optionally, in the implementations corresponding to FIG. 1, FIG. 2, FIG. 3a, FIG. 3b, and FIG. 3c, the low band mode is a 1/4 model of the second antenna branch 12, and 1/4 of a wavelength corresponding to a center frequency of the low band mode is a length of the second antenna branch 12. The center frequency of the low band mode is a center frequency of a frequency band corresponding to the low band mode.

Optionally, in the implementations corresponding to FIG. 1, FIG. 2, FIG. 3a, FIG. 3b and FIG. 3c, the middle-high band mode includes any one of a first middle-high band mode, a second middle-high band mode, and a third middle-high band mode.

The first middle-high band mode is a 1/4 model of the first antenna branch 11, the second middle-high band mode is a 3/4 model of the second antenna branch 12, and the third middle-high band mode is a 1/2 model from the first antenna branch 11 to the matching point.

1/4 of a wavelength corresponding to a center frequency of the first middle-high band mode is a length of the first antenna branch 11, 3/4 of a wavelength corresponding to a center frequency of the second middle-high band mode is a length of the second antenna branch 12, and 1/2 of a wavelength corresponding to a center frequency of the third middle-high band mode is a sum of the length of the first antenna branch 11 and a part of the length of the second antenna branch 12, where the part of the length of the second antenna branch 12 includes a length between the end P2 of the second antenna branch 12 and the matching point Pm. In other words, 1/2 of the wavelength corresponding to the center frequency of the third middle-high band mode is a length between a ground end Ps1 of the first antenna branch 11 and the matching point Pm. The center frequency of the middle-high band mode is a center frequency of a frequency band corresponding to the middle-high band mode.

In this implementation, the length of the first antenna branch 11 is from the end P1 of the first antenna branch 11 to the ground end Ps1 of the first antenna branch 11, and the length of the second antenna branch 12 is from the end P2 of the second antenna branch 12 to a ground end Ps2 of the second antenna branch 12.

When the pair of antenna branches 10 operates in the first middle-high band mode, since 1/4 of the wavelength corresponding to the center frequency of the first middle-high band mode is the length of the first antenna branch 11, a middle-high band current from the middle-high band feeding point MHB reaches the end P1 of the first antenna branch 11, and less current reaches the second antenna branch 12 through the parasitic capacitor formed between the end P1 of the first antenna branch 11 and the end P2 of the second antenna branch 12, thus posing less interference with the low band feeding point LB on the second antenna branch 12.

When the pair of antenna branches 10 operates in the second middle-high band mode, since 3/4 of the wavelength corresponding to the center frequency of the second middle-high band mode is the length of the second antenna branch 12, a middle-high band current from the middle-high band feeding point MHB reaches the second antenna branch 12, thus posing interference with the low band feeding point LB on the second antenna branch 12.

When the pair of antenna branches 10 operates in the third middle-high band mode, since 1/2 of the wavelength corresponding to the center frequency of the third middle-high band mode is the sum of the length of the first antenna branch 11 and the part of the length of the second antenna branch 12, a middle-high band current from the middle-high band feeding point MHB reaches the second antenna branch 12, and can be cut off at the matching point Pm after reaching the second antenna branch 12, and the current from the middle-high band feeding point MHB does not pass through the low band feeding point LB and will not pose interference with the low band feed, thus improving antenna isolation between the first antenna branch 11 and the second antenna branch 12.

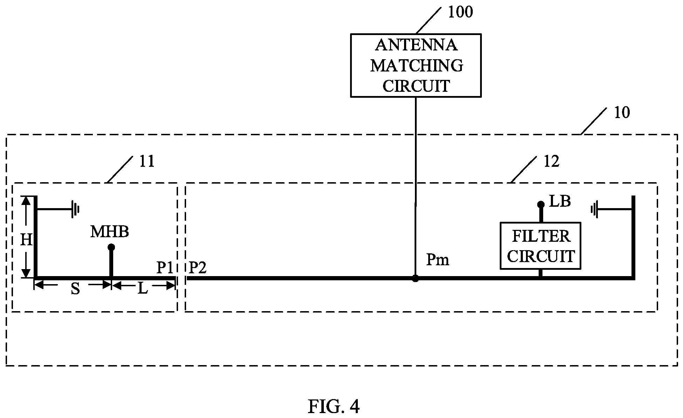

Optionally, in order to avoid the interference caused by the current from the middle-high band feeding point MHB to the low band feeding point LB on the second antenna branch 12 in the first middle-high band mode and the second middle-high band mode, a filter circuit can be provided at the low band feeding point LB. Reference is made to FIG. 4, which is a schematic structural diagram of application of an antenna matching circuit and a filter circuit in a pair of antenna branches provided in implementations of the present disclosure . As illustrated in FIG. 4, the filter circuit 40 is arranged at the low band feeding point LB, and the filter circuit 40 is configured to filter out the interference of the middle-high band current in the first middle-high band mode to the low band feeding point LB, and the filter circuit 40 is also configured to filter out the interference of the middle-high band current in the second middle-high band mode to the low band feeding point LB. The filter circuit 40 can be designed as a band-pass filter. The filter circuit 40 can filter out a current signal in a middle-high band (for example, 1710MHz-2690MHz) and allow a current signal in a low band (for example, 703MHz- 960MHz) to pass through. Therefore, the interference caused by the current from the middle-high band feeding point MHB of the first antenna branch 11 to the low band feeding point LB of the second antenna branch 12 can be avoided.

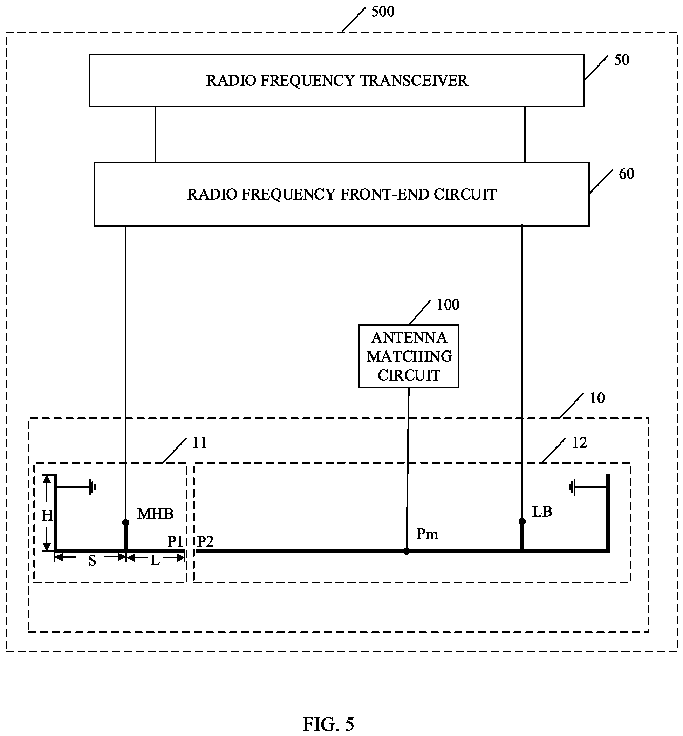

Reference is made to FIG. 5, which is a schematic structural diagram of a radio frequency circuit provided in implementations of the present disclosure. As illustrated in FIG. 5, the radio frequency circuit 500 includes a radio frequency transceiver 50, a radio frequency front-end circuit 60, an antenna matching circuit 100, and a pair of antenna branches 10. As illustrated in FIG. 5, the radio frequency transceiver is configured to feed a current signal (a middle-high band current signal or a low band current signal) to the pair of antenna branches 10 through the radio frequency front-end circuit 60, and also to receive an electromagnetic signal induced by the pair of antenna branches 10 through the radio frequency front-end circuit 60.

The radio frequency front-end circuit 60 may include a power amplifier (PA), a filter, a low noise amplifier (LNA), a transceiver diverter switch, a duplexer, a transceiver diverter switch, a power coupler, etc.

The antenna matching circuit 100 is applied to the pair of antenna branches 10 including the first antenna branch 11 and the second antenna branch 12. The first antenna branch 11 is provided with the middle-high band feeding point MHB and the second antenna branch 12 is provided with the low band feeding point LB.

The antenna matching circuit 100 is provided with the matching point Pm, which is located between the end P2 of the second antenna branch 12 and the low band feeding point LB, and the distance between an end P1 of the first antenna branch 11 and the end P2 of the second antenna branch 12 is less than the preset distance threshold.

The equivalent impedance of the antenna matching circuit 100 is an inductor or a high resistance when the pair of antenna branches 10 operates in the low band mode, and the equivalent impedance of the antenna matching circuit 100 is a capacitor or a low resistance when the pair of antenna branches 10 operates in the middle-high band mode.

When the pair of antenna branches 10 operates in the middle-high band mode, the equivalent impedance of the antenna matching circuit 100 is designed as a capacitor or a low resistance. Because a middle-high band current easily passes through a pure capacitor or a low resistance, a middle-high band current from the first antenna branch 11 in the pair of antenna branches 10 easily passes through the antenna matching circuit 100, and the middle-high band current from the first antenna branch 11 in the pair of antenna branches 10 is cut off at the matching point. A current from the first antenna branch 11 does not pass through the low band feeding point on the second antenna branch 12, and does not interfere with the low band feed, so that antenna isolation between the first antenna branch 11 and the second antenna branch 12 can be improved.

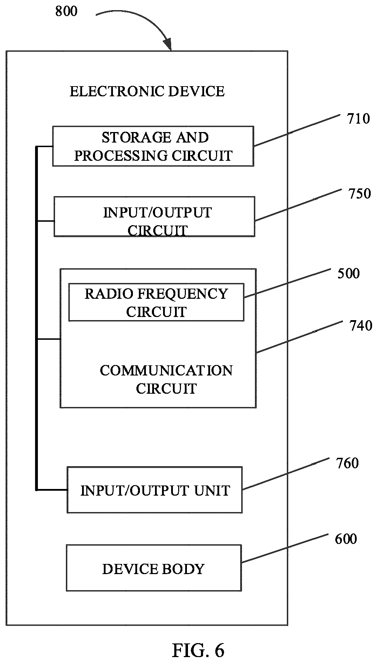

Reference is made to FIG. 6, which is a schematic structural diagram of an electronic device provided in implementations of the present disclosure. As illustrated in FIG. 6, the electronic device 800 can include a device body 600 and a radio frequency circuit 500. The electronic device 800 can also include a storage and processing circuit 710 and a communication circuit 720 connected with the storage and processing circuit 710, and the radio frequency circuit 500 can be a part of the communication circuit 720. The electronic device 800 can also be provided with a display component or a touch component.

The storage and processing circuit 710 can be a memory, such as a hard disk drive memory, a non-volatile memory (such as a flash memory or other electronic programmable read-only memory for forming solid-state drives, etc.), a volatile memory (such as a static or dynamic random access memory, etc.), etc., which is not limited in implementations of the present disclosure. The processing circuit in the storage and processing circuit 710 can be configured for operations of the electronic device 800. The processing circuit can be implemented based on one or more microprocessors, microcontrollers, digital signal processors, baseband processors, power management units, audio codec chips, application specific integrated circuits, display driver integrated circuits, etc.

The storage and processing circuit 710 can be configured to run software in the electronic device 800, such as a Voice over Internet Protocol (VOIP) telephone calling application, a media playing application, operating system functions, etc. These software can be used to perform some control operations, for example, image acquisition based on a camera, ambient light measurement based on an ambient light sensor, proximity sensor measurement based on a proximity sensor, an information display function based on a status indicator such as a Light Emitting Diode, touch event detection based on a touch sensor, operations associated with performing wireless communication functions, operations associated with collecting and generating audio signals, control operations associated with collecting and processing button press event data, and other functions in electronic device 800, etc., which is not limited in implementations of the present disclosure.

The electronic device 800 may also include an input/output circuit 750. The input/output circuit 750 can be configured to enable the electronic device 800 to input and output data, that is, to allow the electronic device 800 to receive data from external devices and also to allow the electronic device 800 to output data from the electronic device 800 to external devices. The input/output circuit 750 may further include a sensor. The sensor can include an ambient light sensor, a proximity sensors based on light and capacitance, a touch sensor (for example, a light-based touch sensor and/or a capacitive touch sensor, where the touch sensor can be part of a touch display screen or used independently as a touch sensor structure), an acceleration sensor, and other sensors.

The input/output circuit 750 may further include a touch sensor array. The touch sensor may be a capacitive touch sensor formed by an array of transparent touch sensor electrodes (such as indium tin oxide (ITO) electrodes), or may be a touch sensor formed by using other touch technologies, such as sonic touch, pressure-sensitive touch, resistive touch, optical touch, etc., which is not limited in implementations of the present disclosure.

The communication circuit 720 can be configured to provide the electronic device 800 with ability to communicate with external devices. The communication circuit 720 may include an analog and digital input-output interface circuit and a wireless communication circuit based on a radio frequency signal and/or an optical signal. The wireless communication circuit in the communication circuit 720 may include a radio frequency transceiver circuit, a power amplifier circuit, a low noise amplifier, a switch, a filter, and an antenna. For example, the wireless communication circuit in the communication circuit 720 may include a circuit for supporting communication by transmitting and receiving electromagnetic signals. For example, the communication circuit 720 may include a communication antenna and a communication transceiver. The communication circuit 720 may further include a cellular phone transceiver and a cellular phone antenna, a wireless local area network transceiver circuit and a wireless local area network antenna, etc. In the communication circuit 720, the radio frequency signal can be received and sent by the radio frequency circuit 500.

The electronic device 800 may further include a battery, a power management circuit and an input/output unit 760. The input/output unit 760 may include a button, a joystick, a click wheel, a scroll wheel, a touch pad, a keypad, a keyboard, a camera, a light emitting diode or other status indicators, etc.

A user can control operations of the electronic device 800 by inputting commands through the input/output circuit 750, and can use output data of the input/output circuit 750 to receive status information and other outputs from the electronic device 800.

In the foregoing implementations, the description of each implementation has its own emphasis. For the parts not described in detail in an implementation, reference may be made to related descriptions in other implementations.

In the implementations of the present disclosure, it is to be noted that, the device disclosed in implementations provided herein may be implemented in other manners. For example, the device implementations described above are merely illustrative; for instance, the division of the unit is only a logical function division and there can be other manners of division during actual implementations; for example, multiple units or components may be combined or may be integrated into another system, or some features may be ignored, omitted, or not performed. In addition, coupling or direct coupling or communication connection between each illustrated or discussed component may be indirect coupling or communication connection via some interfaces, devices, or units, and may be electrical connection, or other forms of connection.

The units described as separate components may or may not be physically separated, and the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device, and so on) to perform all or part of the steps described in the various implementations of the present disclosure. The memory includes various medium capable of storing program codes, such as a USB (universal serial bus) flash disk, a read-only memory (ROM), a RAM, a removable hard disk, a disk, a compact disc (CD), or the like.

It will be noted by those of ordinary skill in the art that all or a part of the various methods of the implementations described above may be accomplished by means of a program to instruct associated hardware, where the program may be stored in a computer-readable memory, which may include a flash memory, a ROM, a RAM, a disk or a CD, and so on.

The implementations of the present disclosure are described in detail above, specific examples are used herein to describe the principle and implementation manners of the present disclosure. The description of the above implementations is merely used to help understand the method and the core idea of the present disclosure. Meanwhile, those skilled in the art may make modifications to the specific implementation manners and the application scope according to the idea of the present disclosure. In summary, the contents of the specification should not be construed as limiting the present disclosure.

**Claims**

1. An antenna matching circuit applied to a pair of antenna branches comprising a first antenna branch and a second antenna branch, wherein the first antenna branch is provided with a middle-high band feeding point and the second antenna branch is provided with a low band feeding point; wherein,

   a matching point is provided between an end of the second antenna branch and the low band feeding point, the antenna matching circuit is coupled with the second antenna branch through the matching point, and a distance between an end of the first antenna branch and the end of the second antenna branch is less than a preset distance threshold; and
   an equivalent impedance of the antenna matching circuit is an inductor or a high resistance on condition that the pair of antenna branches operates in a low band mode; and the equivalent impedance of the antenna matching circuit is a capacitor or a low resistance on condition that the pair of antenna branches operates in a middle-high band mode.

2. The circuit according to claim 1, wherein the antenna matching circuit comprises a passive matching circuit.

3. The circuit according to claim 2, wherein the antenna matching circuit comprises a matching sub-circuit, one end of the matching sub-circuit is coupled with the matching point, and the other end of the matching sub-circuit is grounded.

4. The circuit according to claim 2, wherein the antenna matching circuit comprises at least two matching sub-circuits and the antenna matching circuit further comprises a tuning switch; the tuning switch comprises a fixed terminal and at least two selection terminals, one end of a first matching sub-circuit being coupled with a first selection terminal of the tuning switch and the other end of the first matching sub-circuit being grounded, the first selection terminal being a selection terminal in the at least two selection terminals corresponding to the first matching sub-circuit, the fixed terminal being coupled with the matching point, and the first matching sub-circuit being any one of the at least two matching sub-circuits.

5. The circuit according to claim 2, wherein the antenna matching circuit comprises at least two matching sub-circuits and the antenna matching circuit further comprises at least two tuning switches corresponding to the at least two matching sub-circuits, one end of a first matching sub-circuit being coupled with the matching point through a first tuning switch and the other end of the first matching sub-circuit being grounded, the first matching sub-circuit being any one of the at least two matching sub-circuits and the first tuning switch being a tuning switch in the at least two tuning switches corresponding to the first matching sub-circuit.

6. The circuit according to any one of claims 3 to 5, wherein the matching sub-circuit comprises at least one inductor and at least one capacitor.

7. The circuit according to claim 6, wherein the matching sub-circuit comprises an inductor and a capacitor, the inductor and the capacitor being connected in parallel.

8. The circuit according to claim 6, wherein the matching sub-circuit comprises a first inductor, a second inductor, and a first capacitor, the first inductor being connected in series with the first capacitor and then connected in parallel with the second inductor.

9. The circuit according to any one of claims 1 to 8, wherein the middle-high band mode comprises any one of a first middle-high band mode, a second middle-high band mode, and a third middle-high band mode;

the first middle-high band mode being a 1/4 model of the first antenna branch, the second middle-high band mode being a 3/4 model of the second antenna branch, and the third middle-high band mode being a 1/2 model from the first antenna branch to the matching point;

wherein 1/4 of a wavelength corresponding to a center frequency of the first middle-high band mode is a length of the first antenna branch, 3/4 of a wavelength corresponding to a center frequency of the second middle-high band mode is a length of the second antenna branch, and 1/2 of a wavelength corresponding to a center frequency of the third middle-high band mode is a sum of the length of the first antenna branch and a part of the length of the second antenna branch, the part of the length of the second antenna branch comprising a length between the end of the second antenna branch and the matching point.

10. The circuit of claim 9, wherein the length of the first antenna branch is a length between the end of the first antenna branch and a ground end of the first antenna branch, and the length of the second antenna branch is a length between the end of the second antenna branch and a ground end of the second antenna branch.

11. The circuit according to claim 9, wherein a filter circuit is provided at the low band feeding point, the filter circuit being configured to filter out interference of a middle-high band current in the first middle-high band mode to the low band feeding point, and the filter circuit being further configured to filter out interference of a middle-high band current in the second middle-high band mode to the low band feeding point.

12. The circuit according to claim 11, wherein the filter circuit comprises a band-pass filter, and the filter circuit is configured to filter out a current signal in a middle-high band and allow a current signal in a low band to pass through.

13. The circuit according to claim 9, wherein on condition that the pair of antenna branches operates in the third middle-high band mode, a middle-high band current from the middle-high band feeding point reaches the second antenna branch and is cut off at the matching point.

14. The circuit according to claim 1, wherein the first antenna branch is a planar inverted L antenna or a planar inverted F antenna, and the second antenna branch is a planar inverted L antenna or a planar inverted F antenna.

15. The circuit according to claim 1, wherein a frequency band corresponding to the low band is 703 MHz- 960 MHz; and a frequency band corresponding to the middle-high band is 1710 MHz- 2690 MHz.

16. The circuit according to claim 1, wherein on condition that the pair of antenna branches operates in the low band mode, a low band current in the pair of antenna branches from the second antenna branch is cut off at the matching point.

17. The circuit according to claim 1, wherein on condition that the pair of antenna branches operates in the middle-high band mode, a middle-high band current in the pair of antenna branches from the first antenna branch is cut off at the matching point.

18. A radio frequency circuit, comprising a radio frequency transceiver, a radio frequency front-end circuit, the antenna matching circuit and the pair of antenna branches according to any one of claims 1 to 17.

19. The radio frequency circuit according to claim 18, wherein the radio frequency transceiver is configured to feed a current signal to the pair of antenna branches through the radio frequency front-end circuit, and the radio frequency transceiver is further configured to receive an electromagnetic signal induced by the pair of antenna branches through the radio frequency front-end circuit.

20. An electronic device, comprising a device body and the radio frequency circuit according to claim 19.

FIG. 1

FIG. 2

ANTENNA MATCHING CIRCUIT

100

101    102    10N

...

31    32    ...    3N    20

21

10

11    12

H

MHB    LB

P1  P2    Pm

S    L

FIG. 3a

FIG. 3b

FIG. 3c

FIG. 4

/ 500

RADIO FREQUENCY TRANSCEIVER / 50

RADIO FREQUENCY FRONT-END CIRCUIT / 60

/ 100

ANTENNA
MATCHING
CIRCUIT

/ 10

/ 11

/ 12

H

MHB

P1 P2

S L

Pm

LB

FIG. 5

800

ELECTRONIC DEVICE

STORAGE AND
PROCESSING CIRCUIT — 710

INPUT/OUTPUT
CIRCUIT — 750

RADIO FREQUENCY
CIRCUIT — 500

— 740

COMMUNICATION
CIRCUIT

INPUT/OUTPUT UNIT — 760

DEVICE BODY — 600

FIG. 6

## INTERNATIONAL SEARCH REPORT

| International application No. |
|---|
| **PCT/CN2020/124819** |

### A. CLASSIFICATION OF SUBJECT MATTER

H04B 1/18(2006.01)i;  H01Q 1/22(2006.01)i

According to International Patent Classification (IPC) or to both national classification and IPC

### B. FIELDS SEARCHED

Minimum documentation searched (classification system followed by classification symbols)

H04B,H01Q

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE: 天线, 匹配, 馈电, 低频, 高频, 电感, 电容, antenna, match, feed, low band, high band, inductance, capacitance

### C. DOCUMENTS CONSIDERED TO BE RELEVANT

| Category* | Citation of document, with indication, where appropriate, of the relevant passages | Relevant to claim No. |
|---|---|---|
| PX | CN 110752855 A (GUANGDONG OPPO MOBILE TELECOMMUNICATIONS CORP., LTD.) 04 February 2020 (2020-02-04)<br>description, paragraphs [0023]-[0078], and figures 1-4 | 1-20 |
| X | CN 106252829 A (SAMSUNG ELECTRONICS CO., LTD.) 21 December 2016 (2016-12-21)<br>description paragraphs [0056]-[0064], [0108]-[0126], figures 2A-2B, 8C, 10 | 1-20 |
| X | CN 110247160 A (HUAWEI TECHNOLOGIES CO., LTD.) 17 September 2019 (2019-09-17)<br>description, paragraphs [0035]-[0047], and figures 1-2 | 1-20 |
| A | CN 205657174 U (GUANGDONG OPPO MOBILE TELECOMMUNICATIONS CORP., LTD.) 19 October 2016 (2016-10-19)<br>entire document | 1-20 |
| A | CN 205646164 U (GUANGDONG OPPO MOBILE TELECOMMUNICATIONS CORP., LTD.) 12 October 2016 (2016-10-12)<br>entire document | 1-20 |
| A | US 9859617 B1 (ETHERTRONICS, INC.) 02 January 2018 (2018-01-02)<br>entire document | 1-20 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 January 2021** | **28 January 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/124819**

| Patent document cited in search report | | | Publication date (day/month/year) | Patent family member(s) | | | Publication date (day/month/year) |
|---|---|---|---|---|---|---|---|
| CN | 110752855 | A | 04 February 2020 | None | | | |
| CN | 106252829 | A | 21 December 2016 | CN | 106252829 | B | 01 November 2019 |
| | | | | US | 2016365623 | A1 | 15 December 2016 |
| | | | | EP | 3104456 | A1 | 14 December 2016 |
| | | | | KR | 20160146138 | A | 21 December 2016 |
| | | | | US | 9935359 | B2 | 03 April 2018 |
| | | | | EP | 3104456 | B1 | 05 August 2020 |
| CN | 110247160 | A | 17 September 2019 | None | | | |
| CN | 205657174 | U | 19 October 2016 | None | | | |
| CN | 205646164 | U | 12 October 2016 | None | | | |
| US | 9859617 | B1 | 02 January 2018 | None | | | |

Form PCT/ISA/210 (patent family annex) (January 2015)